# EUROPÄISCHE PATENTSCHRIFT

(11) **EP 2 924 314 B1**
(45) Veröffentlichungstag und Bekanntmachung des Hinweises auf die Patenterteilung: **01.11.2017**
(21) Anmeldenummer: 14161389.3
(22) Anmeldetag: 25.03.2014
(51) Int. Cl.: F16F 15/03, F16F 7/116

(54) **Schwingungstilger**
Vibration damper
Amortisseur de vibrations

(43) Veröffentlichungstag der Anmeldung: 30.09.2015
(73) Patentinhaber: Wölfel Beratende Ingenieure GmbH & Co. KG, 97204 Höchberg (DE)
(72) Erfinder: Engelhardt, Jürgen, Dr., 97249 Eisingen (DE)
(74) Vertreter: Knoblauch, Andreas

(56) Entgegenhaltungen:
- DE-A1- 19 739 877
- US-A- 4 852 848
- US-A1- 2007 131 504
- US-B1- 6 397 988

## Beschreibung

Die Erfindung betrifft einen Schwingungstilger zur Minderung von Schwingungen, insbesondere von Rohrleitungen, mit einer Basis, einer Befestigungsvorrichtung, einer Dämpfungsvorrichtung und einer Tilgervorrichtung, die eine Massenanordnung und mindestens einen mit der Massenanordnung und der Basis verbundenen Federstab aufweist.

Im Bereich des Anlagenbaus, wie beispielsweise in Chemieanlagen oder in Kraftwerken, werden Rohrleitungssysteme dazu verwendet, flüssige oder gasförmige Medien zu transportieren. Bei diesem Transport kann es zu Schwingungsanregungen der Rohrleitungssysteme kommen. Die Gründe für diese Schwingungsanregungen können vielfältig sein. Zum einen kann es sich dabei um stationäre Strömungsvorgänge handeln, also beispielsweise turbulente Strömungen im Rohr oder Umlenkungen von Stoffströmen.

Andererseits können ebenso Druckstöße und Flüssigkeitsschläge auftreten, die beispielsweise durch schnelles Schalten an Armaturen, schnelles An- oder Abfahren von Pumpen oder durch im Medium auftretende Phasenänderungen bedingt sein können. Auch kann der Einsatz von Arbeitsmaschinen oder das Auftreten lokaler Schwankungen in Prozessgrößen zu Druckpulsationen führen, die wiederum Schwingungsanregungen im Rohrleitungssystem zur Folge haben. Schließlich sind aber auch Fremdanregungen als Ursache für Schwingungen im Rohrleitungssystem denkbar. Hierfür kommen etwa Umwelteinflüsse, wie beispielsweise starker Wind oder Erdbeben in Betracht; es sind jedoch auch betriebliche Ursachen denkbar, wie beispielsweise Störfälle in der Anlage.

Im Anlagenbau sind stetig steigende Anforderungen an Effizienz und Produktivität zu verzeichnen. Eine gestiegene Werkstoffqualität und damit einhergehende höhere Ausnutzungsgrade der Rohrleitungssysteme ermöglichen eine zunehmend leichtere Bauweise von Rohrleitungen.

Da die Auslegung von Rohrleitungssystemen im Anlagenbau zumeist jedoch nur im Hinblick auf statische Belastungen durchgeführt wird, können im Betrieb der Anlage auftretende dynamische Lasten zu unerwünschten Schwingungsanregungen führen. Diese begrenzen die Produktivität der Anlage und stellen ebenso ein Sicherheitsrisiko dar. So können Schwingungsanregungen in Rohrleitungssystemen mit der Zeit zu Materialermüdung und schließlich zum Versagen der Leitung führen. Ein Versagen der Rohrleitung ist insbesondere dann kritisch, wenn es zur Undichtigkeit der Leitung führt und den Austritt des transportierten Mediums ermöglicht. Insbesondere im Bereich von Chemieanlagen kann es dadurch zu einer Gefährdung von Mensch und Umwelt kommen.

Es ist bekannt, zur Minderung von Schwingungsanregungen, wie beispielsweise in Rohrleitungssystemen, Schwingungstilger einzusetzen. Die Resonanzfrequenz des schwingenden Systems eingestellt. Dies führt zu einer Dämpfung von Schwingungen im Resonanzbereich des schwingenden Systems. Derartige Schwingungstilger können direkt am schwingenden System, also beispielsweise einer Rohrleitung, angebracht werden. Sie kommen ohne festes Widerlager aus, was insbesondere dann von Vorteil ist, wenn beispielsweise um eine Rohrleitung errichtete Gerüste, die als Widerlager dienen könnten, nicht ausreichend steif sind und mitschwingen, oder aber weil an einer geeigneten Anbringungsstelle an der Rohrleitung keine umgebenden Gerüste vorhanden sind.

DE 197 39 877 A1 zeigt einen mechanischen Resonator mit variabler Resonanzfrequenz. Eine träge Masse ist an einer eingespannten Blattfeder befestigt. Die Blattfeder ist ein oder beidseitig mit einer piezoelektrischen Schicht beschichtet oder zwischen Piezoelementen eingespannt. Eine Steuereinheit liefert Spannungen an die Piezoelemente um der Auslenkung entgegenwirkende Kräfte zu erzeugen.

US 4 852 848 A offenbart einen Schwingungsdämpfer für Rohre. Eine oder mehrere Schwingungsdämpfer sind über Schellen an Rohren befestigt. Die Schwingungsdämpfer umfassen schwenkbare Arme an deren freien Ende eine oder mehrere Massen beispielsweise über Schraubverbindungen befestigt sind.

Aus US 2007/0131504 A1 ist ein weiterer Schwingungsdämpfer bekannt. Der Schwingungsdämpfer umfasst einen Wirbelstromdämpfer mit zwei Magnetanordnungen zwischen denen eine schwenkbar aufgehängte Leiterplatte angeordnet ist.

US 6 397 988 B1 offenbart einen Schwingungsdämpfer für ein Pipelinesystem. Der Schwingungsdämpfer ist über Schellen an der Pipeline befestigt. Am freien Ende eines schwenkbaren Armes sind mehrere Massenelemente befestigt.

Die Verwendung von Schwingungstilgern ist dann von Vorteil, wenn diese völlig autark betrieben werden können, d.h. wenn keine Energiezuführung während des Betriebs erforderlich ist. Weiterhin ist es für den autarken Betrieb eines Schwingungstilgers Voraussetzung, dass die Tilgerparameter sehr präzise einstellbar sind und über die Lebensdauer des Schwingungstilgers unverändert bleiben. Der Schwingungstilger muss verschleißfrei und unabhängig von Umgebungseinflüssen, wie beispielsweise der Temperatur, betrieben werden können. Ein Einsatz des Schwingungstilgers in Chemieanlagen setzt weiterhin voraus, dass dieser keine elektrischen Komponenten enthält und auch die Möglichkeit der Funkenbildung weitestgehend ausgeschlossen ist. Hierdurch wird der Betrieb in explosionsgefährdeten Gebieten ermöglicht.

Der Erfindung liegt daher die Aufgabe zugrunde, einen autarken Schwingungstilger mit einfach einstellbaren Tilgerparametern bereitzustellen.

Diese Aufgabe wird bei einem Schwingungstilger der eingangs genannten Art dadurch gelöst, dass der Federstab eine relativ zu einer Einspannlänge veränderbare Federlänge aufweist, mit der eine Tilgerfrequenz des Schwingungstilgers einstellbar ist, wobei die Dämpfungsvorrichtung mindestens einen Wirbelstromdämpfer aufweist, und wobei die Dämpfungsvorrichtung zwei relativ zueinander in einem Winkel angeordnete Wirbelstromdämpfer aufweist.

Der Federstab der Tilgervorrichtung des Schwingungstilgers verbindet die Massenanordnung des Schwingungstilgers mit dessen Basis. Der Abstand des Angriffspunktes des Federstabs an der Massenanordnung vom Fußpunkt des Federstabs auf der Basis bestimmt die Einspannlänge des Federstabs. Diese Einspannlänge entspricht einer Federlänge des Federstabs. Die Federlänge des Federstabs bezeichnet den Abschnitt des Federstabs, der bei Wirkung des Tilgers infolge externer Anregung durch Schwingung elastisch verformt werden kann. Da der Federstab mit der Massenanordnung des Schwingungstilgers verbunden ist und einen Fußpunkt auf der Basis des Schwingungstilgers aufweist, ist somit eine Tilgermasse bestimmt, die durch externe Anregung in Schwingung versetzt werden kann. Eine Frequenzabstimmung des Schwingungstilgers erfolgt in einem ersten Schritt durch Anpassung der Einspannlänge des Federstabs. Diese Einspannlänge entspricht dann der Federlänge des Federstabs. Eine kurze Einspannlänge des Federstabs entspricht dabei einer hohen Tilgerfrequenz; eine lange Einspannlänge des Federstabs entspricht einer niedrigen Tilgerfrequenz. Der erfindungsgemäße Schwingungstilger weist eine relativ zu einer Einspannlänge veränderbare Federlänge auf. Es ist möglich, die Federlänge des Federstabs relativ zu seiner konstant gehaltenen Einspannlänge zu verändern. Es ist hierdurch eine einfache Frequenzabstimmung gegeben, ohne dass konstruktive Änderungen am Schwingungstilger und insbesondere dessen Tilgervorrichtung notwendig wären. Die Einspannlänge des Federstabs kann beibehalten werden, wobei zugleich jedoch eine weitere Abstimmung der Tilgerfrequenz des Schwingungstilgers vorgenommen werden kann.

Weiterhin weist die Dämpfungsvorrichtung mindestens einen Wirbelstromdämpfer aufweist. Der Wirbelstromdämpfer wird dabei aus einer Leiterplatte und aus um diese angeordneten Magneten gebildet. Der Wirbelstromdämpfer der Dämpfungsvorrichtung dient der Dämpfung der durch das schwingende System auf den Schwingungstilger übertragenen Schwingungsanregung. Die Dämpfungsparameter der Dämpfungsvorrichtung können dabei beispielsweise über die Leiterplattendicke, die wiederum den Luftspalt festlegt, abgestimmt werden. Die Dämpfungswirkung ist proportional zur Schwinggeschwindigkeit der Massenanordnung und die Dämpfungsparameter sind unabhängig von deren Schwingungsamplitude. Wirbelstromdämpfer arbeiten unabhängig von Umgebungseinflüssen, wie beispielsweise der Temperatur, und sind verschleißfrei. Es kann ein autarker Schwingungstilger bereitgestellt werden. Auch enthalten Wirbelstromdämpfer keine elektrischen Komponenten und die Möglichkeit der Funkenbildung ist weitestgehend ausgeschlossen. Der Schwingungstilger kann in explosionsgefährdeten Gebieten eingesetzt werden.

Außerdem weist die Dämpfungsvorrichtung zwei relativ zueinander in einem Winkel angeordnete Wirbelstromdämpfer aufweist. Der Dämpfungsparameter wird durch die Anzahl der Wirbelstromdämpfer in der Dämpfungsvorrichtung und deren Anordnung zueinander grob eingestellt; die Wahl der Leiterplattendicke der Wirbelstromdämpfer ermöglicht eine Feinabstimmung. Wirbelstromdämpfer sind verschleißfrei und benötigen keine externe Energiezuführung. Es kann ein autarker Schwingungstilger bereitgestellt werden. Durch geeignete Wahl des Federstabquerschnitts, entweder rund oder rechteckig, können in den beiden Bewegungsrichtungen unterschiedliche Tilgerfrequenzen eingestellt werden. Durch die Wahl der Anzahl der Wirbelstromdämpfer und der Leiterplattendicke können in den beiden Bewegungsrichtungen unterschiedliche Tilgerdämpfungsgrade eingestellt werden. Bei dem erfindungsgemäßen Schwingungstilger handelt es sich um einen 2D-Schwingungstilger, der Schwingungen in zwei Freiheitsgraden dämpfen kann.

Vorzugsweise ist der Federstab auf mindestens einem Abschnitt seiner Länge von mindestens einer Versteifungshülse umgeben. Die Versteifungshülse kann in einer beliebigen Position entlang des Federstabs derartig angeordnet werden, dass ihre Umfangsfläche den Federstab in ihrem Inneren aufnimmt. Die Versteifungshülse dient dabei als eines von ihrem Inneren aufnimmt. Die Versteifungshülse dient dabei als eines von zwei konstruktiven Elementen der Realisierung einer veränderbaren Federlänge des Federstabs bei gleichbleibender Einspannlänge. Es kann entsprechend eine Mehrzahl an Versteifungshülsen vorgesehen sein.

Dabei ist bevorzugt, dass der Abschnitt im Bereich eines Endes des Federstabs angeordnet ist. Die Versteifungshülse lässt sich derartig positionieren, dass sie entweder dem Angriffspunkt des Federstabs an der Massenanordnung oder aber dem Fußpunkt des Federstabs auf der Basis des Schwingungstilgers benachbart ist. Vorzugsweise wird die Versteifungshülse jedoch an dem Ende des Federstabs angeordnet sein, das dessen Angriffspunkt an der Massenanordnung benachbart ist.
Die Biegesteifigkeit der Versteifungshülse kann dabei größer als die des Federstabs gewählt werden; dies ist jedoch bei dem erfindungsgemäßen Schwingungstilger nicht zwingend notwendig. Unabhängig von dieser Wahl werden jedoch jedenfalls Verformungen des Federstabs auf dem Abschnitt seiner Länge unterdrückt, der von der Versteifungshülse umgeben ist. Damit trägt der Abschnitt der Länge des Federstabs, auf dem er von der Versteigungshülse umgeben ist, nicht zu seiner Federlänge bei.

Weiterhin ist bevorzugt, dass die Versteifungshülse durch ein auf dem Federstab positionierbares Halteelement in ihrer Position gehalten ist. Das Halteelement dient dazu, die Versteifungshülse auch bei Schwingungsanregungen des Federstabs zuverlässig in ihrer Position zu halten. Zudem fixiert das Halteelement den Federstab in der horizontalen Ebene. Die Verwendung des Halteelements ermöglicht eine präzise Einstellung der Tilgerfrequenz des Schwingungstilgers; das Halteelement kann gewährleisten, dass diese über die Lebensdauer des Schwingungstilgers unverändert bleibt. Das Halteelement verhindert ein Verrutschen der Versteifungshülse durch mechanische Belastungen.

Die Federlänge des Federstabs wird durch die Position des Halteelements eingestellt, ohne dass die Einspannlänge des Federstabs verändert werden müsste. Die Federlänge des Federstabs lässt sich relativ zu seiner Einspannlänge verändern und somit kann die durch die Einspannlänge vorgegebene Tilgerfrequenz des Schwingungstilgers weiter bestimmt werden. Die Verwendung einer Mehrzahl an Versteifungshülsen in Zusammenhang mit dem Halteelement ermöglicht eine Feinjustierung der Tilgerfrequenz des Schwingungstilgers. Die Anzahl an Versteifungshülsen bestimmt die Position des Halteelements, die wiederum die Federlänge des Federstabs festlegt.

Vorzugsweise weist die Massenanordnung mindestens ein erstes Massenelement, das direkt mit dem Federstab verbunden ist, und mindestens ein zweites Massenelement auf, das über das erste Massenelement mit dem Federstab verbunden ist. Der Angriffspunkt des Federstabs in der Massenanordnung befindet sich an einem ersten Massenelement. Die Einspannlänge des Federstabs bezieht sich folglich auf den Abstand des Angriffspunktes des Federstabs am ersten Massenelement zum Fußpunkt des Federstabs an der Basis. Die Position des ersten Massenelements innerhalb der Massenanordnung bestimmt die Einspannlänge des Federstabs und somit in einem ersten Schritt der Frequenzabstimmung auch die Tilgerfrequenz des Schwingungstilgers. Das Einbringen einer Ein- oder Mehrzahl an zweiten Massenelementen ermöglicht über die Verwendung von Versteifungshülsen und Halteelement hinaus eine weitere stufenweise Abstimmung der Tilgerfrequenz des Schwingungstilgers. Die durch die Einspannlänge des Federstabs gewählte Tilgerfrequenz kann dabei beibehalten werden, da nur das erste Massenelement der Massenanordnung direkt mit dem Federstab verbunden ist. Alle weiteren zweiten Massenelemente der Massenanordnung sind lediglich indirekt über das erste Massenelement mit dem Federstab verbunden. Hierdurch wird ebenso das Anbringen zusätzlicher zweiter Massenelemente erleichtert, da diese lediglich mit den bereits in der Tilgervorrichtung befindlichen zweiten Massenelementen verbunden werden müssen.

Dabei ist bevorzugt, dass das erste Massenelement mindestens einen Befestigungsbereich aufweist, an dem der Federstab angreift. Der Angriffspunkt des Federstabs am ersten Massenelement der Massenanordnung befindet sich in einem Befestigungsbereich des ersten Massenelements. Dieser Befestigungsbereich kann beispielsweise eine Nut aufweisen, mit der der Federstab in Eingriff steht. Die Verbindung des Federstabs mit dem ersten Massenelement im Befestigungsbereich kann beispielsweise bevorzugt durch Verschrauben hergestellt werden.

Dabei ist bevorzugt, dass das zweite Massenelement im Bereich des Federstabs eine Ausnehmung aufweist, die den Befestigungsbereich des ersten Massenelements freilässt. Der Federstab kann in dieser Ausnehmung entlang der zweiten Massenelemente der Massenanordnung geführt werden, so dass ein Angriff des Federstabs am Befestigungsbereich des ersten Massenelementes, der in den Bereich der Ausnehmung des zweiten Massenelements ragt, möglich ist. Die Ausnehmung bietet ebenso Raum für die Versteifungshülse, die auf einem Abschnitt der Länge des Federstabs angeordnet ist. Diese kann dabei unmittelbar benachbart zum Befestigungsbereich des ersten Massenelements angeordnet sein, der in den Bereich der Ausnehmung des zweiten Massenelements ragt. Die auf dem Federstab angeordnete Versteifungshülse ist dabei vorzugsweise an einem Ende des Federstabs angeordnet, und wird somit in der Ausnehmung des zweiten Massenelements zwischen dem Befestigungsbereich des ersten Massenelements und dem Halteelement angeordnet. Es wird eine platzsparende Bauweise des Schwingungstilgers erreicht.

Vorzugsweise ist die Tilgerfrequenz durch Permutation einer Anordnung der Massenelemente stufenweise abstimmbar. Die Position des ersten Massenelements bestimmt dabei die Einspannlänge des Federstabs. Eine Permutation der Anordnung der ersten und zweiten Massenelemente bedingt dabei eine Veränderung der Einspannlänge des Federstabs und folglich eine Veränderung der Tilgerfrequenz, wobei die Tilgermasse jedoch unverändert bleiben kann. Somit kann die Tilgerfrequenz unabhängig von der Tilgermasse eingestellt werden.

Weiterhin ist bevorzugt, dass das erste Massenelement und das zweite Massenelement je einen flächigen Abschnitt aufweisen. Der flächige Abschnitt der Massenelemente ermöglicht es, diese in einfacher Weise nebeneinander anzuordnen. Insbesondere ist es möglich, die Massenelemente aufeinander zu stapeln und eine platzsparende Bauweise zu erreichen.

Dabei ist bevorzugt, dass eine erste Anzahl zweiter Massenelemente auf einer Seite des flächigen Abschnitts des ersten Massenelements und diametral auf einer anderen Seite eine zweite Anzahl zweiter Massenelemente angeordnet ist. Es lässt sich eine unterschiedliche Anzahl an zweiten Massenelementen auf beiden Seiten des flächigen Abschnitts des ersten Massenelements anbringen. Bei einem relativ kurzen Abstand zwischen erstem Massenelement und Fußpunkt des Federstabs wird die Federlänge des Federstabs weiter verkürzt. Dies beeinflusst die Eigenfrequenz, ohne dass dafür die Masse herabgesetzt werden müsste.

Vorzugsweise weist die Tilgervorrichtung mindestens eine Vorspannvorrichtung auf. Die Vorspannvorrichtung dient dazu, eine statische Absenkung der Massenanordnung der Tilgervorrichtung bei einem Betrieb des Schwingungstilgers in Richtung des Erdschwerefelds zu kompensieren. Der Vorteil der Kompensation der statischen Absenkung besteht darin, dass den beiden möglichen Auslenkungsrichtungen in und entgegen der Richtung des Erdschwerefelds gleich viel Schwingweg zur Verfügung steht und durch die Absenkung die dynamischen Amplituden und damit die Wirkung des Schwingungstilgers nicht vermindert wird.

Die Erfindung wird im Folgenden anhand bevorzugter Ausführungsbeispiele in Verbindung mit den Zeichnungen beschrieben. Hierin zeigen:
- Fig. 1: einen Schwingungstilger ohne eine Basis und ohne eine Befestigungsvorrichtung,
- Fig. 2: eine Basis und eine Befestigungsvorrichtung des Schwingungstilgers,
- Fig. 3: einen Schwingungstilger mit einer Vorspannvorrichtung,
- Fig. 4: eine Basis, eine Befestigungsvorrichtung und ein Gehäuse eines Schwingungstilgers,
- Fig. 5: eine Magnetbaugruppe eines Wirbelstromdämpfers einer Dämpfungsvorrichtung des Schwingungstilgers.

Ein Schwingungstilger 1, der zur Minderung von Schwingungen, insbesondere von Rohrleitungen verwendet werden kann, weist eine Basis 2, eine Befestigungsvorrichtung 3, eine Dämpfungsvorrichtung 4 und eine Tilgervorrichtung 5 auf. Die Tilgervorrichtung 5 weist eine Massenanordnung 6 und mindestens einen mit dieser Massenanordnung 6 und der Basis 2 verbundenen Federstab 7 auf.

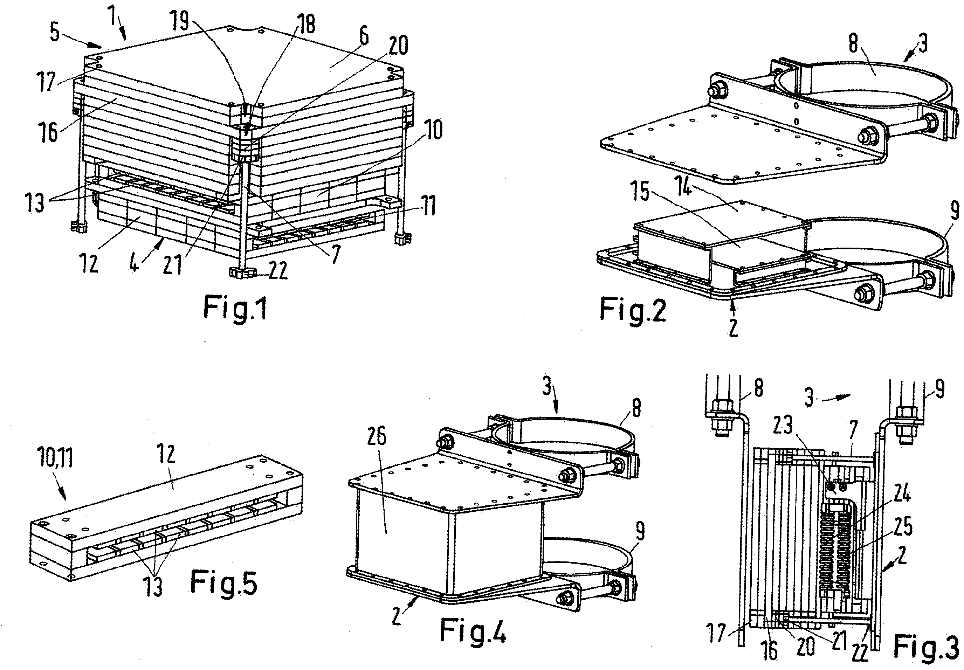

Die Befestigungsvorrichtung 3 ist in dem gezeigten Ausführungsbeispiel der Fig. 2, 3 und 4 beispielhaft als eine erste Schelle 8 und eine zweite Schelle 9 ausgebildet. Die Schellen 8, 9 sind an der Basis 2 angeordnet.

Die Dämpfungsvorrichtung 4 weist zwei in einem rechten Winkel zueinander angeordnete Wirbelstromdämpfer auf. Diese bestehen aus einer ersten Magnetbaugruppe 10 und einer zweiten Magnetbaugruppe 11. Die ersten und zweiten Magnetbaugruppen 10, 11 weisen dabei eine Mehrzahl (im Ausführungsbeispiel der Fig. 1 fünf) Magnetbaugruppengehäuse 12 auf, die Magneten 13 der Wirbelstromdämpfer enthalten. Die Magneten 13 sind dabei innerhalb des Magnetbaugruppengehäuses 12 jeweils gegenüberliegend an dessen Innenseite angeordnet. Die im Ausführungsbeispiel der Figuren gezeigten Wirbelstromdämpfer weisen weiterhin eine erste Leiterplatte 14 und eine zweite Leiterplatte 15 auf, die in einem rechten Winkel zueinander angeordnet sind, wie dies aus Fig. 2 ersichtlich ist. Die ersten und zweiten Leiterplatten 14, 15 sind dabei in einem Zwischenraum zwischen den Magneten 13, die gegenüberliegend an den Innenseiten der Magnetbaugruppengehäuse 12 angeordnet sind, aufgenommen. Ein Wirbelstromdämpfer der Dämpfungsvorrichtung 4 wird also jeweils durch eine erste Magnetbaugruppe 10 und eine erste Leiterplatte 14 sowie eine zweite Magnetbaugruppe 11 und eine zweite Leiterplatte 15 gebildet.

Der Dämpfungsparameter der Dämpfungsvorrichtung 4 wird durch die Anzahl der Wirbelstromdämpfer und damit über die Anzahl der Magnetbaugruppen 10, 11 grob eingestellt. Eine Anpassung der Dicke der ersten und zweiten Leiterplatten 14, 15 ermöglicht eine weitere Feinabstimmung des Dämpfungsparameters. Der Aufbau der Magnetbaugruppen 10, 11 ist exemplarisch für das vorliegende Ausführungsbeispiel in Fig. 5 gezeigt. Eine mögliche Anordnung der ersten und zweiten Leiterplatten 14, 15 ist für das vorliegende Ausführungsbeispiel in Fig. 2 veranschaulicht. Die Anordnung der ersten und zweiten Magnetbaugruppen 10, 11 innerhalb der Dämpfungsvorrichtung 4 ist aus Fig. 1 ersichtlich.

Die Tilgervorrichtung 5 des Schwingungstilgers 1 weist eine Massenanordnung 6 auf, die erste Massenelemente 16 und zweite Massenelemente 17 umfasst. Im Ausführungsbeispiel der Fig. 1 ist dabei lediglich ein erstes Massenelement 16 vorgesehen. Die Massenanordnung 6 weist acht zweite Massenelemente 17 auf. Das erste Massenelement 16 zeigt dabei einen Befestigungsbereich 18, der einen Angriffspunkt für den Federstab 7 am ersten Massenelement 16 bildet. Im Ausführungsbeispiel der Fig. 1 steht der Federstab 7 mit dem Befestigungsbereich 18 über eine Nut, die im Befestigungsbereich 18 angeordnet ist, in Eingriff. Um eine sichere Verbindung des Federstabs 7 mit dem Befestigungsbereich 18 des ersten Massenelements 16 zu gewährleisten, kann der Federstab 7 beispielsweise bevorzugt durch Verschrauben mit dem Befestigungsbereich 18 verbunden werden. Der Befestigungsbereich 18 nimmt dabei ein erstes Ende des Federstabs 7 auf, so dass er einen ersten Endpunkt der Einspannlänge des Federstabs 7 bildet.

Oberhalb und unterhalb des Befestigungsbereichs 18 der Fig. 1 sind Ausnehmungen 19 der zweiten Massenelemente 17 angeordnet. Diese Ausnehmungen 19 lassen den Befestigungsbereich 18 des ersten Massenelements 16 derartig frei, dass der Federstab 7 im Raum dieser Ausnehmung 19 angeordnet werden kann.

Ebenso lassen sich Versteifungshülsen 20 innerhalb der Ausnehmung 19 der zweiten Massenelement 17 anordnen. Im Ausführungsbeispiel der Fig. 1 sind die Versteifungshülsen 20 unterhalb des Befestigungsbereichs 18 innerhalb der Ausnehmung 19 angeordnet. Die Versteifungshülsen 20 befinden sich also an einem ersten Ende des Federstabs 7. Die Versteifungshülsen 20 können eine größere Biegesteifigkeit als der Federstab 7 aufweisen; dies ist jedoch bei einem erfindungsgemäßen Schwingungstilger 1 nicht zwingend erforderlich. Auch können die Versteifungshülsen 20 mit einer relativ engen Passung auf dem Federstab 7 angeordnet werden. Sie umgeben diesen auf einem Abschnitt seiner Länge dergestalt, dass eine Verformung des Federstabs 7 in diesem Bereich verhindert wird. Allerdings ist auch die relativ enge Passung der Versteifungshülsen 20 auf dem Federstab 7 nicht zwingend erforderlich bei einem erfindungsgemäßen Schwingungstilger 1. Somit wird die Federlänge des Federstabs 7 um diejenige Länge des Abschnitts des Federstabs 7 verkürzt, auf dem die Versteifungshülsen 20 angeordnet sind.

Die Versteifungshülsen 20 werden in ihrer Position auf dem Federstab 7 durch ein festklemmbares Halteelement 21 gehalten. Das Halteelement 21 wird ebenso wie die Versteifungshülsen 20 innerhalb der Ausnehmung 19 der zweiten Massenelemente 17 angeordnet. Das Halteelement 21 dient der Einstellung der Federlänge des Federstabs 7 und trägt somit zur Abstimmung der Tilgerfrequenz des Schwingungstilgers 1 bei. Es wird dabei bevorzugt aus demselben Material wie die Versteifungshülse 20 gefertigt sein. Die Federlänge des Federstabs 7 wird durch horizontale Einspannung des Halteelements 21 eingestellt. Die Fixierung des Federstabs 7 kann dabei beispielsweise durch jeweils in einem Winkel (beispielsweise 90°) versetzte Gewindebohrungen mit darin untergebrachten Schrauben geschehen. Das Halteelement 21 kann durch Verschrauben mit dem ersten Massenelement 16, beispielsweise durch zwei Schrauben, verbunden werden. Dabei kann vorgesehen sein, dass diese Schrauben in die Versteifungshülsen 20 eingreifen und diese somit in ihrer Position auf dem Federstab 7 fixieren. Ein zweites Ende des Federstabs 7 wird durch den Fußpunkt 22 des Federstabs 7 auf der Basis 2 gebildet. Am Fußpunkt 22 des Federstabs 7 kann ein weiteres Halteelement vorgesehen sein.

Im vorliegenden Ausführungsbeispiel der Fig. 1 ist die Einspannlänge des Federstabs 7 bestimmt durch den Abstand des Befestigungsbereiches 18 und damit des Angriffspunktes des Federstabs 7 an diesem Befestigungsbereich 18 und dem Fußpunkt 22 des Federstabs 7 an der Basis 2. Die Federlänge des Federstabs 7 jedoch stimmt im gezeigten Ausführungsbeispiel der Fig. 1 nicht mit der Einspannlänge überein. Die Federlänge des Federstabs 7 ist vielmehr durch den Abstand zwischen dem Halteelement 21 und dem Fußpunkt 22 an der Basis 2 bestimmt. Durch Anbringen einer entsprechenden Anzahl an Versteifungshülsen 20 auf dem Federstab 7 kann also die Federlänge des Federstabs 7 relativ zu seiner Einspannlänge verändert und somit die Tilgerfrequenz des Schwingungstilgers 1 eingestellt werden. Federlänge und Einspannlänge des Federstabs 7 sind voneinander verschieden.

Im gezeigten Ausführungsbeispiel ist der Federstab 7 mit einem Kreisprofil ausgeführt. Ein solcher Federstab 7 dient der Dämpfung von Systemen, die in beiden Freiheitsgraden dieselbe Eigenfrequenz aufweisen, d.h. der Schwingungstilger 1 hat in beiden Wirkungsrichtungen dieselbe Tilgerfrequenz. Ebenso sind Federstäbe 7 mit einem Rechteckprofil für die Dämpfung von Systemen vorgesehen, die in den beiden Freiheitsgraden unterschiedliche Eigenfrequenzen aufweisen. Hierdurch werden unterschiedliche Tilgerfrequenzen in den beiden Schwingungsrichtungen möglich.

Im Ausführungsbeispiel der Fig. 1 sind die ersten und zweiten Massenelemente 16, 17 der Massenanordnung 6 als Massenscheiben ausgebildet. Die ersten und zweiten Massenelemente 16, 17 können somit aufeinander gestapelt angeordnet werden. Hierdurch lässt sich eine platzsparende Bauweise erreichen. Auch sind die ersten und zweiten Massenelemente 16, 17 rechteckig ausgeführt. Entsprechend sind im vorliegenden Ausführungsbeispiel, jeweils in den Ecken des Rechtecks der ersten und zweiten Massenelemente 16, 17 vier Federstäbe 7 vorgesehen, auf denen jeweils Versteifungshülsen 20 (im vorliegenden Beispiel jeweils drei) und Halteelemente 21 unterhalb der Versteifungshülsen 20 vorgesehen. Die Masse der zweiten Massenelemente 17 kann sich von Massenelement zu Massenelement unterscheiden. Ebenso kann die Masse des ersten Massenelements 16 eine andere sein als jeweils die Masse der zweiten Massenelemente 17.

Oberhalb und unterhalb des ersten Massenelements 16 kann jeweils eine unterschiedliche Anzahl an zweiten Massenelementen 17 vorgesehen sein. Die zweiten Massenelemente 17 können dabei untereinander beispielsweise durch Verschrauben miteinander verbunden werden. Die zweiten Massenelemente 17 sind nicht direkt mit dem Federstab 7 verbunden. Ihre Verbindung mit dem Federstab 7 geschieht lediglich indirekt über eine Verbindung der zweiten Massenelemente 17 mit dem ersten Massenelement 16. Diese Verbindung kann beispielsweise durch Verschrauben erfolgen.

Zwischen den zweiten Massenelementen 17 und dem Fußpunkt 22 des Federstabs 7 an der Basis 2 sind die ersten und zweiten Magnetbaugruppen 10, 11 mit den entsprechenden Magnetbaugruppengehäusen 12, die die Magneten 13 enthalten, derartig angeordnet, dass sich die ersten und zweiten Leiterplatten 14, 15 zwischen den Magneten 13 an der Ober- und Unterseite des Magnetbaugruppengehäuses 12 befinden. Wie insbesondere aus Fig. 2 ersichtlich ist, sind die ersten und zweiten Leiterplatten 14, 15 in einem rechten Winkel zueinander angeordnet und auf der Basis 2 angebracht.

Als Befestigungsvorrichtung 3 dienen erste und zweite Schellen 8, 9, die ebenfalls an der Basis 2 angebracht sind. Die Schellen 8, 9 sind im vorliegenden Ausführungsbeispiel als Rohrschellen ausgebildet. Dies ermöglicht insbesondere ein Anbringen des Schwingungstilgers 1 an Rohrleitungen.

In Fig. 3 wird der Schwingungstilger 1 in einem zusammengebauten Zustand gezeigt. Dabei weist die Tilgervorrichtung 5 eine Vorspannvorrichtung 23 auf. Diese Vorspannvorrichtung 23 umfasst ein erstes Spannelement 24 und ein zweites Spannelement 25. Die Vorspannvorrichtung 23 ist an der Basis 2 befestigt, beispielsweise bevorzugt durch Verschrauben. Die ersten und zweiten Spannelemente 24, 25 dienen zur Kompensation der statischen Absenkung der Massenanordnung 6 und damit der ersten und zweiten Massenelemente 16, 17 im Erdschwerefeld. Ein Betrieb des Schwingungstilgers 1 ist somit auch in Richtung des Erdschwerefeldes möglich.

Schließlich kann noch ein Gehäuse 26 vorgesehen sein, dass die Dämpfungsrichtung 4 und die Tilgervorrichtung 5, die auf der Basis 2 angeordnet sind, umgibt. Ein derartiges Gehäuse 26 kann die Dämpfungsvorrichtung 4 und die Tilgervorrichtung 5 vor schädlichen Umwelteinflüssen schützen. Insgesamt kann der Schwingungstilger 1 also verschleißfrei betrieben werden und arbeitet somit völlig autark.

Der Schwingungstilger 1 des vorliegenden Ausführungsbeispiels verwendet im Wesentlichen baugleiche Teile und kann somit als Baukastensystem konzipiert werden. Dies erhöht die Wirtschaftlichkeit seiner Herstellung und darüber hinaus kann der Schwingungstilger 1 problemlos in verschiedenen Größenklassen hergestellt werden.

## Patentansprüche

1. Schwingungstilger (1) zur Minderung von Schwingungen, insbesondere von Rohrleitungen, mit einer Basis (2), einer Befestigungsvorrichtung (3), einer Dämpfungsvorrichtung (4) und einer Tilgervorrichtung (5), die eine Massenanordnung (6) und mindestens einen mit der Massenanordnung (6) und der Basis (2) verbundenen Federstab (7) aufweist, wobei der Federstab (7) eine relativ zu einer Einspannlänge veränderbare Federlänge aufweist, mit der eine Tilgerfrequenz des Schwingungstilgers (1) einstellbar ist, **dadurch gekennzeichnet, dass** die Dämpfungsvorrichtung (4) mindestens einen Wirbelstromdämpfer (10, 14) aufweist, und dass die Dämpfungsvorrichtung (4) zwei relativ zueinander in einem Winkel angeordnete Wirbelstromdämpfer (10, 14; 11, 15) aufweist.

2. Schwingungstilger nach Anspruch 1, **dadurch gekennzeichnet, dass** der Federstab (7) auf mindestens einem Abschnitt seiner Länge von mindestens einer Versteifungshülse (20) umgeben ist.

3. Schwingungstilger nach Anspruch 2, **dadurch gekennzeichnet, dass** der Abschnitt im Bereich eines Endes des Federstabs (7) angeordnet ist.

4. Schwingungstilger nach einem der Ansprüche 2 oder 3, **dadurch gekennzeichnet, dass** die Versteifungshülse (20) durch ein auf dem Federstab (7) positionierbares Halteelement (21) in ihrer Position gehalten ist.

5. Schwingungstilger nach einem der Ansprüche 1 bis 4, **dadurch gekennzeichnet, dass** die Massenanordnung (6) mindestens ein erstes Massenelement (16), das direkt mit dem Federstab (7) verbunden ist, und mindestens ein zweites Massenelement (17) aufweist, das über das erste Massenelement (16) mit dem Federstab (7) verbunden ist.

6. Schwingungstilger nach Anspruch 5, **dadurch gekennzeichnet, dass** das erste Massenelement (16) mindestens einen Befestigungsbereich (18) aufweist, an dem der Federstab (7) angreift.

7. Schwingungstilger nach Anspruch 6, **dadurch gekennzeichnet, dass** das zweite Massenelement (17) im Bereich des Federstabs (7) eine Ausnehmung (19) aufweist, die den Befestigungsbereich (18) des ersten Massenelements (16) frei lässt.

8. Schwingungstilger nach einem der Ansprüche 6 oder 7, **dadurch gekennzeichnet, dass** die Tilgerfrequenz durch Permutation einer Anordnung der Massenelemente (16, 17) stufenweise abstimmbar ist.

9. Schwingungstilger nach einem der Ansprüche 6 bis 8, **dadurch gekennzeichnet, dass** das erste Massenelement (16) und das zweite Massenelement (17) je einen flächigen Abschnitt aufweisen.

10. Schwingungstilger nach Anspruch 9, **dadurch gekennzeichnet, dass** eine erste Anzahl zweiter Massenelemente (17) auf einer Seite des flächigen Abschnitts des ersten Massenelements (16) und diametral auf einer anderen Seite eine zweite Anzahl zweiter Massenelemente (17) angeordnet ist.

11. Schwingungstilger nach einem der Ansprüche 1 bis 10, **dadurch gekennzeichnet, dass** die Tilgervorrichtung mindestens eine Vorspannvorrichtung (23) aufweist.

## Claims

1. Vibration absorber (1) for reducing vibrations, in particular vibrations of pipes, comprising a base (2), a fastening device (3), a damping device (4) and an absorption device (5) that comprises a mass arrangement (6) and at least one spring rod (7) that is connected to the mass arrangement (6) and the base (2), the spring rod (7) having a loaded length of spring that can be varied relative to a clamping length and by means of which an absorption frequency of the vibration absorber (1) can be adjusted, **characterised in that** the damping device (4) comprises at least one eddy-current damper (10, 14), and **in that** the damping device (4) comprises two eddy-current dampers (10, 14; 11, 15) that are arranged at an angle relative to one another.

2. Vibration absorber according to claim 1, **characterised in that** the spring rod (7) is enclosed on at least one portion of the length thereof by at least one reinforcing sleeve (20).

3. Vibration absorber according to claim 2, **characterised in that** the portion is arranged in the region of an end of the spring rod (7).

4. Vibration absorber according to either claim 2 or claim 3, **characterised in that** the reinforcing sleeve (20) is held in position by a holding element (21) that can be positioned on the spring rod (7).

5. Vibration absorber according to any of claims 1 to 4, **characterised in that** the mass arrangement (6) comprises at least one first mass element (16) that is directly connected to the spring rod (7), and at least one second mass element (17) that is connected to the spring rod (7) via the first mass element (16).

6. Vibration absorber according to claim 5, **characterised in that** the first mass element (16) comprises at least one fastening region (18) with which the spring rod (7) engages.

7. Vibration absorber according to claim 6, **characterised in that** the second mass element (17) comprises a recess (19) in the region of the spring rod (7), which recess leaves the fastening region (18) of the first mass element (16) free.

8. Vibration absorber according to either claim 6 or claim 7, **characterised in that** the absorption frequency can be tuned by degrees by permutating an arrangement of the mass elements (16, 17).

9. Vibration absorber according to any of claims 6 to 8, **characterised in that** the first mass element (16) and the second mass element (17) each comprise a flat portion.

10. Vibration absorber according to claim 9, **characterised in that** a first number of second mass elements (17) is arranged on one side of the flat portion of the first element (16) and a second number of second mass elements (17) is arranged diametrically on another side.

11. Vibration absorber according to any of claims 1 to 10, **characterised in that** the absorption device comprises at least one biasing device (23).

## Revendications

1. Amortisseur de vibrations (1) pour la réduction de vibrations, en particulier de conduites, avec une base (2), un dispositif de fixation (3), un dispositif d'amortissement (4) et un dispositif amortisseur (5), qui présente un ensemble de masses (6) et au moins une tige à ressort (7) reliée à l'ensemble de masses (6) et à la base (2), dans lequel la tige à ressort (7) présente une longueur de ressort modifiable par rapport à une longueur de serrage, avec laquelle une fréquence d'amortisseur de l'amortisseur de vibrations (1) est réglable, **caractérisé en ce que** le dispositif d'amortissement (4) présente au moins un amortisseur de courant de Foucault (10, 14) et **en ce que** le dispositif d'amortissement (4) présente deux amortisseurs de courant de Foucault (10, 14 ; 11, 15) agencés en un angle l'un par rapport à l'autre.

2. Amortisseur de vibrations selon la revendication 1, **caractérisé en ce que** la tige à ressort (7) est entourée sur au moins une section de sa longueur d'au moins une douille de renforcement (20).

3. Amortisseur de vibrations selon la revendication 2, **caractérisé en ce que** la section est agencée dans la zone d'une extrémité de la tige (7).

4. Amortisseur de vibrations selon l'une quelconque des revendications 2 ou 3, **caractérisé en ce que** la douille de renforcement (20) est maintenue dans sa position par un élément de retenue (21) pouvant être positionné sur la tige à ressort (7).

5. Amortisseur de vibrations selon l'une quelconque des revendications 1 à 4, **caractérisé en ce que** l'ensemble de masses (6) présente au moins un premier élément de masse (16), qui est relié directement à la tige à ressort (7), et au moins un deuxième élément de masse (17), qui est relié à la tige à ressort (7) par le biais du premier élément de masse (16).

6. Amortisseur de vibrations selon la revendication 5, **caractérisé en ce que** le premier élément de masse (16) présente au moins une zone de fixation (18), sur laquelle la tige à ressort (7) vient en prise.

7. Amortisseur de vibrations selon la revendication 6, **caractérisé en ce que** le deuxième élément de masse (17) présente un évidement (19) dans la zone de la tige à ressort (7), qui libère la zone de fixation (18) du premier élément de masse (16).

8. Amortisseur de vibrations selon l'une quelconque des revendications 6 ou 7, **caractérisé en ce que** la fréquence d'amortisseur est ajustable graduellement par permutation d'un agencement des éléments de masse (16, 17).

9. Amortisseur de vibrations selon l'une quelconque des revendications 6 à 8, **caractérisé en ce que** le premier élément de masse (16) et le deuxième élément de masse (17) présentent chacune une section plane.

10. Amortisseur de vibrations selon la revendication 9, **caractérisé en ce qu'**un premier nombre de deuxièmes éléments de masse (17) est agencé sur un côté de la section plane du premier élément de masse (16) et un deuxième nombre de deuxièmes éléments de masse (17) est agencé diamétralement sur un autre côté.

11. Amortisseur de vibrations selon l'une quelconque des revendications 1 à 10, **caractérisé en ce que** le dispositif amortisseur présente au moins un dispositif de précontrainte (23).
